(19) Europäisches Patentamt / European Patent Office / Office européen des brevets

(11) **EP 3 128 344 B1**

(12) **EUROPEAN PATENT SPECIFICATION**

(45) Date of publication and mention of the grant of the patent:
**28.10.2020 Bulletin 2020/44**

(51) Int Cl.:
*G01S 13/10* *(2006.01)*      *G01S 13/522* *(2006.01)*
*G01S 13/524* *(2006.01)*      *G01S 13/95* *(2006.01)*
*G01S 13/58* *(2006.01)*      *G01S 7/41* *(2006.01)*

(21) Application number: **15002332.3**

(22) Date of filing: **05.08.2015**

(54) **METHOD FOR SUPPRESSING WINDMILL RETURNS AND RAIN CLUTTER IN A GROUND BASED PULSE DOPPLER RADAR**

VERFAHREN ZUR UNTERDRÜCKUNG VON WINDMÜHLENECHOS UND REGENSTÖRUNGEN IN EINEM BODENBASIERTEN IMPULS-DOPPLER-RADAR

PROCÉDÉ DE SUPPRESSION D'ÉCHOS PARASITES DE PLUIE ET DE RETOUR D'ÉOLIENNE DANS UN RADAR DOPPLER À IMPULSIONS BASÉ AU SOL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**08.02.2017 Bulletin 2017/06**

(73) Proprietor: **HENSOLDT Sensors GmbH 82024 Taufkirchen (DE)**

(72) Inventors:
• **Nagel, Dieter**
  **89155 Erbach (DE)**
• **Schildknecht, Axel**
  **89081 Ulm (DE)**
• **Rothmaier, Markus**
  **89173 Lonsee (DE)**

(74) Representative: **LifeTech IP**
**Spies & Behrndt Patentanwälte PartG mbB**
**Elsenheimerstraße 47a**
**80687 München (DE)**

(56) References cited:
**CA-A1- 2 593 436      US-A1- 2012 056 775**

• **Dr Robert ET AL: "IEEE New Hampshire Section Radar Systems Course 1 Detection 1/1/2010 IEEE AES Society Radar Systems Engineering Lecture 6 Detection of Signals in Noise", , 11 January 2010 (2010-01-11), XP055241800, Retrieved from the Internet: URL:http://ece.wpi.edu/radarcourse/Radar%2 02010%20PDFs/Radar%202009%20A_6%20Dete ctio n%20of%20Signals%20in%20Noise.pdf [retrieved on 2016-01-15]**

## Description

This invention relates to a new method for suppressing windmill returns in a ground based pulse Doppler radar system.

Most of the ground based pulse Doppler radars work with LPRF waveforms with a PRF below ~1000Hz which results in unambiguous range measurement which is greater than 150km. The advantage of this waveform is even for ground based radars that the near ground clutter from an environment <15km around the radar, when we assume a duty ratio of approximately 10%, is falling into the range blind zone. A further advantage is the high unambiguous range measurement interval and the possibility to work with an STC [1, section 3-6, page 7-12] to suppress returns with a low radar cross section.

The disadvantage of this waveforms is the low unambiguous Doppler velocity interval of < ~50m/s when we assume S-band radars.

In case of windmill farms it is possible that for the respective range area the whole Doppler velocity region is covered with returns from rotor blades, due to the fact that the maximum velocity of the wing tips is ~50m/s, Also in case of heavy rain it could happen that the complete Doppler region is coated with rain clutter over several miles in range.

CA 2 593 436 A1 discloses a known dual beam radar system for detecting targets in the presence of certain types of clutter, wherein the system is configured to obtain first and second sets of radar return signals concurrently and is further configured to detect targets in the first and second sets of radar signals and to identify detected targets due to clutter.

It is the object of the invention to provide a method for a ground based pulse Doppler radar which is able to mitigate the effects of windmills and rain clutter on the detectability of true targets.

This object is achieved by the method according to claim 1. Advantageous embodiments of the inventive method are the subject of subordinate claims.

According to the invention instead of a LPRF, a MPRF waveform with a PRF in the range of 3 to 7kHZ is used which can easily suppress returns from windmills and from strong rain clutter.

In applications where the radar - instead of one fixed PRF - emits successive bursts of different PRFs (which is the standard case) the above-defined range of 3 to 7 kHz applies to the average of these PRFs.

By using the inventive method detections can easily be classified as windmill signals. Further, Doppler regions can easily be classified as rain clutter regions.

## Brief Description of the Drawings

These and other aspects of the present invention will become apparent from the embodiments described hereinafter with reference to the accompanying drawings.

Figure 1: Range-Doppler matrix for an LPRF radar waveform with ground clutter, rain clutter, target, windmill signals and range blind zones (Prior Art);

Figure 2: Detail of range-Doppler matrix shown in Figure 1, extracting the Doppler signals of the windmill returns from around 50km $\pm$ 2km and Doppler velocity returns between $\pm$ 25m/s (Figure 2 shows unambiguous velocity between 0 ... 57m/s, which is equivalent to an unambiguous representation of -28.5m/s ... +28.5m/s);

Figure 3: Range-Doppler matrix of a MPRF radar waveform with ground clutter, rain clutter, target, windmill signals and range blind zones in a) 3D-representation and b) 2D-representation;

Figure 4: Detail of range-Doppler matrix shown in Figure 3b extracting the Doppler signals of the windmill returns around 50km $\pm$ 2km and Doppler velocity returns between $\pm$ 25m/s. Due to the unambiguous range of 32.5km the windmill signals are appearing at 17.5km $\pm$ 2km. Due to the unambiguous velocity of $v_u$ the Doppler returns between 0 ... -25m/s are appearing at $v_u$ -25m/s ... $v_u$);

Figure 5: Blind zones of the range-Doppler matrix for a 1 out of 1 detection scheme where the PRF is selected such that a priority target does not fall into range or Doppler blind zones.

## Use of the LPRF waveform according to prior art

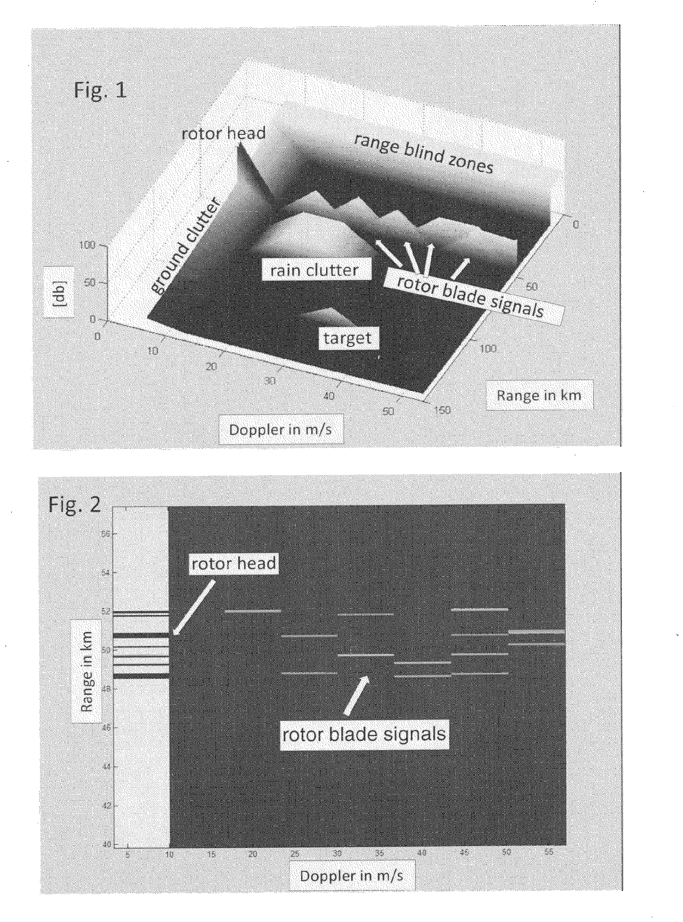

Figure 1 below shows a typical range Doppler matrix (in radar literature also called range Doppler map) of radar signals from a ground based pulse Doppler radar with simulated target, ground clutter, rain clutter and reflections from a windmill area, according to the known LPRF approach. The range Doppler matrix is based on the returns of one single burst of the radar. The pulse repetition frequency PRF of the burst was set to 1.0kHz and the radio frequency RF selected from the S-band was: RF = 2.8GHz.

For the unambiguous range $R_u$ we get with a PRF = 1.0kHz and with c as the velocity of light [2, p. 154]:

$$R_u = \frac{c}{2 \cdot PRF} = 150 km \tag{1}$$

When using range gates with a length of $\Delta R$ = 100m, one pulse repetition interval consist of $N_r = R_u/\Delta R$ = 1500 range gates. The unambiguous velocity $v_u$ is given by:

$$v_u = \frac{c \cdot PRF}{2 \cdot RF} = 53.6 m/s \tag{2}$$

Commonly used in LPRF radars for the Doppler signal processing are DFT lengths of $N_d$ = 8 which results in a velocity resolution of $\Delta v = v_u/N_d$ = 6.7m/s.

In the simulation a duty-cycle [3, p. 3 and 74] of 0.1 was assumed, i.e. the first $N_b = N_r \cdot 0.1$ = 150 range gates are blind. The parameters for the simulation of the windmill area were assumed 15 windmills in a distance between 48km and 52km with random rotor signal returns in a Doppler velocity interval between $\pm$ 25m/s.
The parameters for the target are assumed to be as follows: Target range = 120km, target radial velocity = 300m/s, and target radar cross section = 5m$^2$.

For rain clutter the clutter volume model described in [1, section 15.4] was applied. The parameters for the simulation were as follows: Heavy rain in a distance between 65km and 85km and a height extension between 0m and 3000m. Rain rate $r_{rain}$ = 4mm/hr, rain velocity = 20m/s with $\pm$ 4m/s extension in velocity. For ground clutter a constant $\gamma$-model was used with reflectivity $\sigma_0$ = -25dB for a S-band radar [1, section 15.4].

The disadvantage of this known waveform as already explained in the introductory part of the specification becomes evident in the Figures 1 and 2. The rotor blade signals of the windmills cover the whole Doppler space between 48km and 52km in range. In this area of the range Doppler matrix the detection of flying targets is impeded regardless of the target velocity.

In addition, the rain clutter covers a considerable area of the range-Doppler matrix, i.e. for this example from 65km to 85km in range and from 16m/s to 24m/s in Doppler velocity.

The impact of windmill signals and rain clutter can be very well mitigated when using MPRF waveforms for ground based radars as will be explained in more detail in the following description.

**Definition of the MPRF waveform**

The dwell time $t_{dw}$ depends on the scanning velocity $d\theta/dt$ and the 3dB beamwidth of the antenna $\theta_{3ds}$ as follows:

$$t_{dw} = \frac{\theta_{3dB}}{\dot{\theta}} \tag{3}$$

Inside a dwell N bursts (preferably having different PRFs) of length $t_{burst} + \Delta t$ should be placed, where $t_{burst}$ is the average time for one burst and $\Delta t$ the interrupt time between PRF changes, i.e.:

$$t_{dw} = N \cdot (t_{burst} + \Delta t) \tag{4}$$

When using for the Doppler signal processing an FFT length of $N_d$, the burst length $t_{burst}$ in eq. (4) above can be replaced by $N_d/PRF$. Then, solving for the PRF by using eq. (3) results in:

$$PRF = \frac{N_d \cdot N \cdot \dot{\theta}}{\theta_{3dB} - N \cdot \Delta t \cdot \dot{\theta}} \qquad (5)$$

With the following parameters: $d\theta/dt$ = 72°/s, $\theta_{3dB}$ =1.5°, N = 5, $\Delta t$ = 0.7ms and $N_d$ = 16 we find an average value for the PRF of:

$$PRF = 4.62kHz \qquad (6)$$

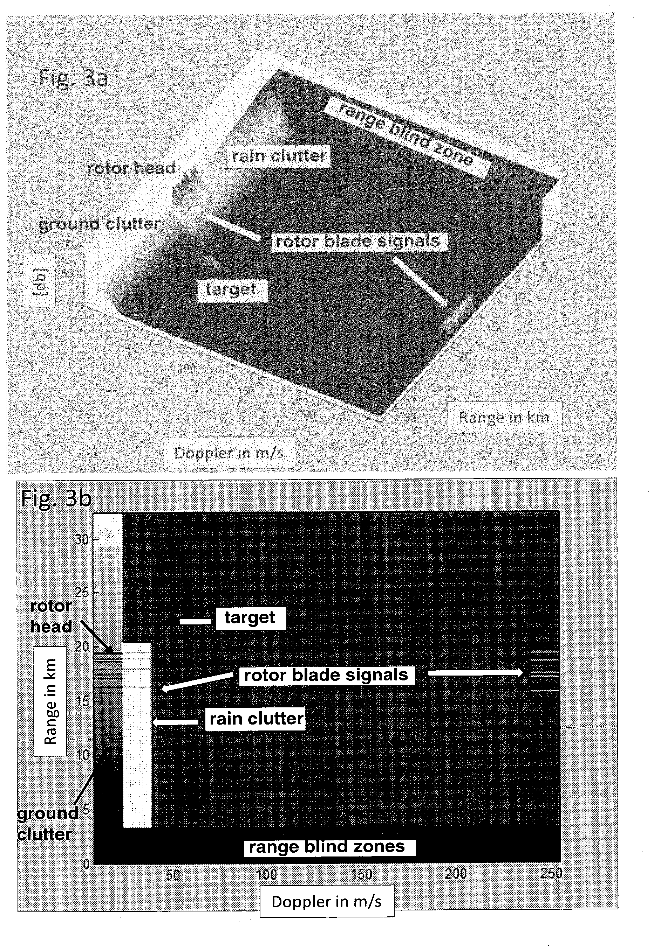

With eqs. (1 and 2) it follows for the unambiguous range and velocity: $R_u$ = 32.5km and $v_u$ = 247.3m/s. With $\Delta R$ =100m and $N_d$ = 16 we have $N_r$ = 325 range gates and a velocity Doppler resolution of $\Delta v$ = $v_u/N_d$ = 15.5m/s. Figure 3 shows a simulation with this PRF for a range-Doppler matrix with simulated target, ground clutter, rain clutter and reflections from a windmill area where the same parameters are used as for the LPRF waveform as described above.

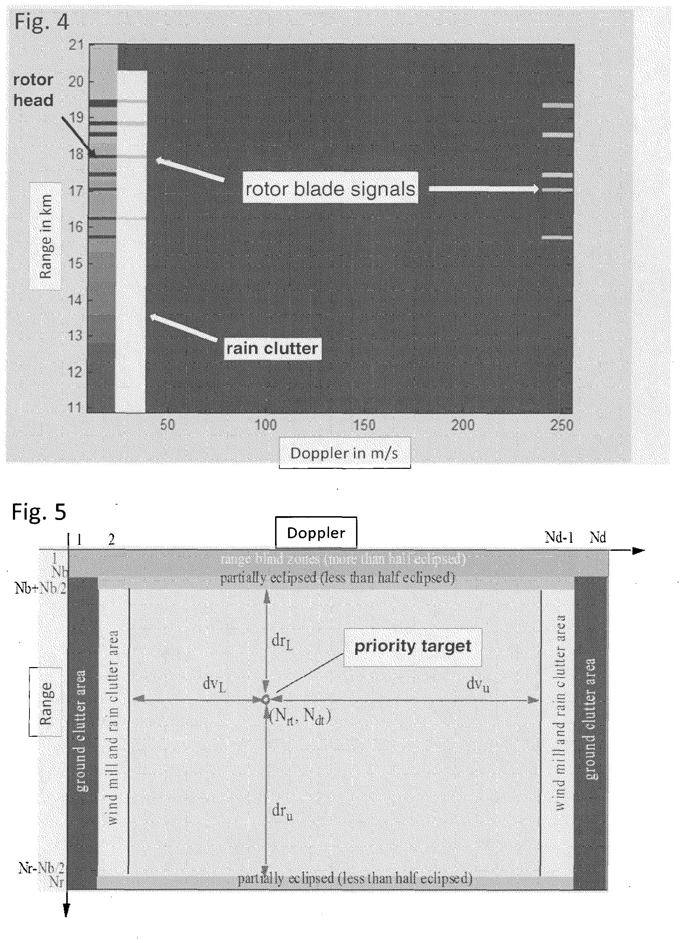

Figure 4 shows details of Figure 3 to extract the windmill signals around 50km (windmill signals appearing in Figure 4 at 17.5km = 50km - 32.5km, where the unambiguous range is 32.5km). The rotor head signals are appearing in the first Doppler filter. The rotor blade signals are only appearing in the second Doppler filter and in the last Doppler filter.
Comparing Figure 4 with Figure 2 it is evident that by using the MPRF waveform the rotor blade signals are only appearing in the first two Doppler filters and in the last Doppler filter, whereas by using the LPRF waveform the whole Doppler space is covered with rotor blade signals in the concerned range gates. Further, it can be seen that with the MPRF approach the rain clutter is only appearing in the second Doppler filter and coincides with rotor blade signals. By contrast, when using a LPRF waveform the rain clutter covers a significant number of filters in the Doppler domain.

**Elimination of windmill signals**

As already explained above, rotor blade signals from windmills are appearing in the described case using a MPRF waveform only in the second and in the last Doppler filter due to the fact that the maximum rotor blade velocity is less than 50m/s but in most cases less than 25m/s and the width of the Doppler filters is ~15m/s. In rare cases it may happen that in the third Doppler filter and in the penultimate Doppler filter some detections are appearing when the rotor axis is perpendicular to the line of sight of the radar and radar pulses are reflected when the rotor is exactly in a vertical position.
In the following it is assumed that no detections are searched in the first Doppler filter due to strong ground clutter signals appearing here which often possess signal levels of 60dB over noise.
When there are detections in the second or third Doppler filter ($N_{rw}$, 2) or ($N_{rw}$, 3) and in the last two Doppler filters ($N_{rw}$, $N_d$-1) and ($N_{rw}$, $N_d$) in a range cell $N_{rw}$ where windmills are suspected, then the power signal levels P($N_{rw}$, 1) and P($N_{rw}\pm$ 1, 1) are assessed, i.e. the power levels of the first Doppler filter in the same range gate $N_{rw}$ or in the adjacent range gate behind $N_{rw}$ or in front of $N_{rw}$. With these power levels it is examined if in at least one of these range gate signals are appearing which stem from the rotor head. In doing this, the fact is exploited that in most cases the rotor head of the windmill reflects signals which correspond to a radar cross section of thousands of square meters. Preferably, information about the position of existing windmills can be provided in an electronic map which is connected to the radar processing unit.
The processing is done by searching the maximum value of the three power levels:

$$P_{rw\,max} = \max(P(N_{rw} - 1,1), P(N_{rw},1), P(N_{rw} + 1,1)) \qquad (7)$$

Using the radar equation [3, page 49], the corresponding cross section $\sigma_{rw}$ is calculated as follows:

$$\sigma_{rw} = \frac{(4\pi)^3 \cdot r^4}{\lambda^2} \cdot \frac{L \cdot P_{rw\,max}}{P_t \cdot G_t \cdot G_r} \qquad (8)$$

Gt(az,el)  = transmit signal antenna gain (one way) in windmill area az,el- direction

Gr(az,el) = receive signal antenna gain (one way) in windmill area az,el- direction
Pt = average transmitted radar power
Pr = received radar power
R = unambiguous distance to windmill
$\lambda$ = radar wavelength
L = common loss factor

In consequence, each detection in the range Doppler cells $(N_{rw}, 2)$ and/or $(N_{rw}, 3)$ and/or $(N_{rw}, N_d-1)$ and/or $(N_{rw}, N_d)$ are flagged as windmill suspected if the following condition holds:

$$\sigma_{rw} \geq \sigma_{th} \tag{9}$$

where $\sigma_{th}$ is a threshold with a value of, for example, $\sigma_{th} = 500m^2$.

**Elimination of rain clutter**

As shown above in Figure 3 and related description, rain clutter signals when using the proposed MPRF waveform are only appearing in the first two Doppler filters or in the last two Doppler filters, when we assume heavy rain with the parameters already used in connection with the LPRF waveform, above: Heavy rain in a distance between 65km and 85km and a height extension between 0m and 3000m. Rain rate r = 4mm/hr, rain velocity = 20m/s with $\pm$ 4m/s extension in velocity.
In contrast to the MPRF waveform, rain clutter causes much more impact in a LPRF waveform, which is visible in Figure 1, where a considerable part of the range-Doppler matrix is covered with rain clutter.
To eliminate rain clutter in the MPRF waveform, the average power levels in the second and in the last two Doppler filters, $P_{ave\_2}$, $P_{ave\_Nd-1}$ and $P_{ave\_Nd}$, are calculated:

$$P_{ave\_i} = \frac{\sum_{r=Nb+1}^{Nr} P(r,i)}{N_r - N_b}, i = 2, N_d - 1, N_d \tag{10}$$

where $N_b$ is the number of blind range gates due to the transmitting signal.
With the above parameters for the rain clutter, the average clutter power in one range-Doppler cell is calculated to:

$$P_{rain} = \frac{P_t \cdot G_t \cdot G_r \cdot \lambda^2 \cdot \eta_r}{(4\pi)^3 r_r^4 \cdot L} \tag{11}$$

where:

$r_r$ = distance to rain cell
$\eta_r$ = backscatter coefficient of volume rain cell of size V, with

$$\eta_r = V \cdot \eta_0 \tag{12}$$

$\eta_0$ = backscatter coefficient of rain,

which is given in the radar literature [1, page 15-12] in dependence on the rain rate $r_{rain}$ (1mm/h $\leq r_{rain} \leq$ 4mm/h) as follows:

$$\eta_0 = 6 \cdot 10^{-14} \cdot r_{rain}^{1.6} \cdot \lambda^{-4} \cdot \frac{1}{m} \tag{13}$$

Inserting all parameters for the MPRF waveform results in the following rain clutter to noise ratio $CNR_{rain}$ in one range-Doppler cell:

$$CNR_{rain}(r_{rain}) \approx 18dB...28dB, \quad 1mm/hr \leq r_{rain} \leq 4mm/hr \tag{14}$$

If $P_{ave\_i}$, for i = 2, $N_d$-1 or $N_d$ is more than $CNR_{rain}$(rain) over the noise level than it is suspected that this Doppler bin is covered with rain clutter and no detections from this Doppler bin are taken for a M out of N detection scheme.

With the MPRF waveform both range and Doppler velocity is measured ambiguously. Using an M out of N detection scheme, range and Doppler velocity can be unfolded and determined unambiguously [1, section 17-4]. Preferably, a 3 out of 5 detection scheme can be applied. That means, a detection is confirmed as a real target only if it can be detected in at least in 3 of 5 successive bursts of different PRFs. The PRF staggering is selected such that the range-Doppler blind zones are minimized. In an example, the following 5 PRFs were selected: 3.697kHz, 4.062kHz, 4.507kHz, 5.062kHz and 5.773kHz. The average PRF results in $PRF_{ave}$ = 4.62kHz which meets the requirements of eq. (6) for the waveform definition according to the invention. For the simulation a duty cycle of 10% and a Doppler blind zone caused by ground clutter of 8 %, which is a bit more than one Doppler filter, were assumed.

**Selection of priority targets in the presence of rain clutter or windmill returns**

If a priority target (in particular in the tracking mode of the radar when previous information about the target is already available) with range $r_t$ and Doppler velocity $v_t$ is flying into an area with rain clutter or with windmill signals, then for this priority target a 2 out of 2 or a 1 out of 1 detection scheme can be applied parallel to the 3 out of 5 detection scheme. This means that only those bursts - depending on their respective PRF - are used which best meet the requirement that the target is well outside the range blind zones and also outside the Doppler blind zones (i.e. ground clutter, rain clutter and windmill signals). An example of the contour of such a range Doppler matrix is shown in the following Figure 5 below.

In Figure 5 it was assumed that a pulse compression signal with length of $N_b$ pulses was used for the transmitting signal. When the receiving signal is convoluted with the pulse compression matched filter the range blind zones can be partially eclipsed.

As can be seen in Figure 5, the range blind zones comprise the range gates 1 to $N_b$+$N_b$/2 and $N_r$-$N_b$/2 to $N_r$ where the return signal is at least partially eclipsed. The Doppler blind zones comprise Doppler filters 1, 2, $N_d$, $N_d$-1 caused by ground clutter, rain clutter and windmill returns.

Suppose the return signal of a priority target is detected in the Doppler cell ($N_{rt}$, $N_{dt}$) as depicted in Figure 5. In order to fulfill the above requirement, the optimal PRFs are determined as follows:

1.) Calculate for each PRF(i), i = 1, ..., N, where N is the number of PRFs, the variable drv(i) which is a relative distance value of the target to the blind zones located at the edges of the range-Doppler matrix:

$dr_L$(i) = $N_{rt}$(i) - ($N_b$ + ceil($N_b$/2)) //distance to lower range blind zone
$dr_u$(i) = ($N_r$(i) - ceil($N_b$/2)) - $N_{rt}$(i) //distance to upper range blind zone
dr(i) = min(|$dr_L$ (i)|, |$dr_u$(i)|)
$dv_L$(i) = $N_{dt}$(i) - 2 // distance to lower Doppler blind zone
$dv_u$(i) = ($N_d$- 2) - $N_{dt}$(i) // distance to upper Doppler blind zone
dv(i) = min(|$dv_L$(i)|, |$dv_u$(i)|)
drv(i) = min(|dr(i)|/|$N_r$(i)-2$N_b$|, |dv(i)|/|$N_d$-4|) // normalize to non-blind range gates and non-blind Doppler filters

2.) Sort the distances drv(i) in descending order.

3.) The selected PRF(i) is the one for which the related drv(i) is greatest.

Let's consider the following random example (N=5):
Suppose the calculation of the drv(i) yields: drv(3)>drv(1)> drv(2)>drv(5)>drv(4)

The selected PRF or PRFs would then be:

If only the optimal PRF is used: PRF (3)
If both the optimal PRF and the second best PRF are used: PRF(3) and PRF (1)

As it became clear from the foregoing description the MPRF waveform, preferably applied in N out of M (e.g. 3 out of 5) detection scheme, is able to cope with the known problems of windmill returns and rain clutter.

For both types of interferences, minimum target radial velocities $v_{t\_min}$ can be specified.

For windmill signals the target should not appear in the first or last Doppler filter in order to avoid the ground clutter regions. For the example MPRF waveform defined above, the following condition for $v_{t\_min}$ of the target should hold:

$$|v_{t\_min}| > 15.5 m/s .$$

$$(15)$$

For rain clutter the target should not appear in the first two or last two Doppler filters. In this case a distinction between approaching and receding targets can be made.

For the approaching case:

$$If\ P_{ave\_2} > CNR_{rain}(rain),$$

then - in the example of the MPRF waveform defined above - the approaching target should satisfy the following condition:

$$-v_{t\_min} > 31.0 m/s .$$

$$(16)$$

Whereas for the receding case we have:

$$If\ P_{ave\_Nd-1} > CNR_{rain}(rain),$$

then the condition of the receding target is:

$$v_{t\_min} > 31.0 m/s.$$

$$(17)$$

In sum, the following advantages are achieved by the invention:

- Detections can clearly be classified as windmill signals.

- Targets can be seen in windmill areas without any problems, if the absolute of the target radial velocity is above a certain threshold (in the example above: > 15.5m/s).

- Doppler regions can clearly be classified as rain clutter regions.

- Targets can be seen in rain clutter areas without any problems, if the absolute of the target radial velocity is above a certain threshold (in the example above: > 31.0m/s).

**Glossary of terms, abbreviations and acronyms**

DFT: Discrete Fourier Transformation

PRF: Pulse Repetition Frequency

MPRF: Medium Pulse Repetition Frequency

LPRF: Low Pulse Repetition Frequency

STC: Sensitivity time control

N: Number of PRFs used in PRF staggering

$N_d$: Number of Doppler filters within the unambiguous Doppler velocity interval

$N_b$: Length of an emitted radar pulse expressed in the corresponding number of range gates

$N_r$: Number of range gates in the unambiguous range interval

$N_{rw}$: Range gate in which windmills are suspected.

RF: Radio Frequency

Burst: A group of one or more pulses of the same PRF which can be processed coherently.

Dwell time: Time necessary to gather data for a single detection and measurement. It consists of one or more bursts which are combined and processed to yield the measurement.

Pulse: The smallest indivisible unit of RF energy which can be transmitted for this mode. Between pulses the radar listens for in-coming signals.

PRI: Time inside a burst from the beginning of one pulse to the beginning of the following pulse (PRI=1/PRF).

Duty cycle: Ratio between the length of an emitted radar pulse and the PRI

Doppler blind zones (of the range-Doppler matrix): Doppler filters where ground clutter, rain clutter and windmill signals occur,

Range blind zones (of the range-Doppler matrix): Range gates where the return signal is at least partially eclipsed due to the emission of the transmit signal of the radar,

Range-Doppler blind zones (of the range-Doppler matrix): The aggregation of Doppler blind zones and range blind zones.

**References:**

(1) Skolnik M.I.: Radar Handbook, 2nd Edition, McGraw Hill, Boston, USA, 1990.
(2) Stimson, George W.: Introduction to Airborne Radar, Second Edition, SCITECH Publishing Inc., Mendham, New Jersey, 1998.
(3) Skolnik M.I.: Introduction to Radar Systems, Third Edition, McGraw Hill Higher Education, International Edition, 2001
(4) Oppenheim, Alan V.; Schafer, Ronald W.: Digital Signal Processing, Prentice Hall Inc.,Englewood Cliffs, New Jersey, 1975.
(5) Harris, Frederic J.: On the Use of Windows for Harmonic Analysis with the Discrete Fourier Transformation, Proceedings of the IEEE, Vol. 66, No. 1, January 1978.

**Claims**

1.  Method for suppressing windmill returns received by a ground based pulse Doppler radar, said method including the following steps:

    a) emitting a waveform comprising a train of pulses at an average pulse repetition frequency of 3 to 7 kHz,

b) upon reception of the echo pulses, transforming the echo pulses into a range Doppler matrix containing the signal power levels of the radar detections and indicating their respective range gate and Doppler filter,

c) determining detections in any of the second, third, penultimate and last Doppler filters in a range gate where windmills are suspected,

d) determining the signal power levels of detections in the first Doppler filter at range gates that are identical or adjacent to the range gate where windmills are suspected,

e) determining the maximum of the signal power levels determined in the previous step,

f) comparing the corresponding radar cross section of the maximum signal power level determined in the previous step with a predefined threshold value derived from the characteristic radar cross section of a rotor head of a windmill,

g) excluding the detections in the range gate where windmills are suspected in the second, third, penultimate and last Doppler filter from further processing if the radar cross section of the maximum signal power level is above the predefined threshold.

2. Method according to claim 1, **characterized in that** for suppressing rain clutter the following additional steps are performed:

a) establishing the average power level of detections for each of the second, penultimate and last Doppler filter outside the range gate blind zones of the range Doppler matrix,

b) comparing the average power levels so established with a predefined threshold derived from a characteristic clutter to noise ratio caused by rain,

c) excluding the detections of those Doppler filters of which the average power level is above the predefined threshold from further processing.

3. Method according to claim 1 or 2, **characterized in that** the train of pulses of the waveform is comprised of several groups of pulses, the so-called bursts, each burst having a different pulse repetition frequency.

4. Method according to claim 3, characterized that only those bursts are used for target detection which possess pulse repetition frequencies for which the smallest of the two following distances a),b), as represented in the range Doppler matrix is greatest:

a) the distance between a target and those areas of the range Doppler matrix which are susceptible to rain clutter, windmill clutter or ground clutter,

b) the distance between the target and the range gate blind zones of the range Doppler matrix.

**Patentansprüche**

1. Verfahren zum Unterdrücken von Windradechos, die durch ein Puls-Doppler-Bodenradar empfangen worden sind, das Verfahren umfasst die folgenden Schritte:

a) Aussenden einer Wellenform, die eine Pulsfolge mit einer mittleren Pulsrepetitionsfrequenz von 3 bis 7 kHz umfasst,

b) nach Empfang der Echopulse Umwandeln der Echopulse in eine Entfernung-Doppler-Matrix, welche die Signalleistungspegel der Radardetektionen enthält und deren jeweiligen Entfernungsbereich und Dopplerfilter angibt,

c) Bestimmen von Detektionen in jedem der zweiten, dritten, vorletzten und letzten Dopplerfilter in einem Entfernungsbereich, in dem Windräder vermutet werden,

d) Bestimmen der Signalleistungspegel von Detektionen in dem ersten Dopplerfilter in Entfernungsbereichen, die mit dem Entfernungsbereich, in dem Windräder vermutet werden, identisch sind oder an diesen angrenzen,

e) Bestimmen des Maximums der im vorangehenden Verfahrensschritt bestimmten Signalleistungspegel,

f) Vergleichen des entsprechenden Radarquerschnitts des im vorangehenden Verfahrensschritt bestimmten maximalen Signalleistungspegels mit einem vorbestimmten, von dem charakteristischen Radarquerschnitt eines Rotorkopfes eines Windrades abgeleiteten Schwellwert,

g) Ausschließen der Detektionen in dem Entfernungsbereich, in dem Windräder vermutet werden, im zweiten, dritten, vorletzten und letzten Dopplerfilter von weiterer Verarbeitung, falls der Radarquerschnitt des maximalen Signalleistungspegels oberhalb der vorbestimmten Schwelle ist.

**2.** Verfahren nach Anspruch 1, **dadurch gekennzeichnet, dass** zum Unterdrücken von Regenstörungen die folgenden zusätzlichen Verfahrensschritte durchgeführt werden:

a) Feststellen des durchschnittlichen Leistungspegels von Detektionen für jeden der zweiten, vorletzten und letzten Dopplerfilter außerhalb der Blindzonen der Entfernungsbereiche der Entfernung-Doppler-Matrix,
b) Vergleichen der so festgestellten durchschnittlichen Leistungspegel mit einer vorbestimmten Schwelle, die von einem charakteristischen Verhältnis von Störsignalen zu Rauschen abgeleitet worden ist,
c) Ausschließen der Detektionen derjeniger Dopplerfilter, bei denen der durchschnittliche Leistungspegel oberhalb der vorbestimmten Schwelle ist, von weiterer Verarbeitung.

**3.** Verfahren nach Anspruch 2 oder 3, **dadurch gekennzeichnet, dass** die Pulsfolge der Wellenform aus mehreren Pulsgruppen, den sogenannten Bursts, besteht, wobei jeder Burst eine unterschiedliche Pulsrepetitionsfrequenz aufweist.

**4.** Verfahren nach Anspruch 3, **dadurch gekennzeichnet, dass** nur diejenigen Bursts zu einer Zielerfassung verwendet werden, die Pulsrepetitionsfrequenzen aufweisen, für welche der kleinste der zwei Abstände a), b), wie in der Entfernung-Doppler-Matrix dargestellt, am größten ist:

a) der Abstand zwischen einem Ziel und denjenigen Teilen der Entfernung-Doppler-Matrix, die auf Regenstörungen, Windradstörungen oder Bodenstörungen anfällig sind,
b) der Abstand zwischen dem Ziel und den Blindzonen des Entfernungsbereiches der Entfernung-Doppler-Matrix.

## Revendications

**1.** Procédé de suppression de retour d'éolienne reçu par un radar Doppler à impulsions basé au sol, ledit procédé comprenant les étapes suivantes :

a) l'émission d'une forme d'onde comprenant un train d'impulsions à une fréquence moyenne de répétition des impulsions comprise entre 3 et 7 kHz,
b) lors de la réception des impulsions d'écho, la transformation des impulsions d'écho en une matrice de portée Doppler contenant les niveaux de puissance de signal des détections radar et indiquant leur porte de distance et leur filtre Doppler respectifs,
c) la détermination des détections dans l'un des deuxième, troisième, avant-dernier et dernier filtres Doppler dans une porte de distance où des éoliennes sont suspectées,
d) la détermination des niveaux de puissance de signal des détections dans le premier filtre Doppler à des portes de distance identiques ou adjacentes à la porte de distance où des éoliennes sont suspectées,
e) la détermination des niveaux de puissance de signal maximum déterminés à l'étape précédente,
f) la comparaison de la section efficace en radar correspondante du niveau de puissance de signal maximum déterminé à l'étape précédente avec une valeur seuil prédéfinie dérivée de la section efficace en radar caractéristique d'une tête de rotor d'une éolienne,
g) l'exclusion des détections dans la porte de distance où des éoliennes sont suspectées dans le deuxième, troisième, avant-dernier et dernier filtres Doppler à partir d'un traitement ultérieur si la section efficace en radar du niveau de puissance de signal maximum est supérieure au seuil prédéfini.

**2.** Procédé selon la revendication 1, **caractérisé en ce que** la suppression des échos parasites de pluie s'effectue selon les étapes supplémentaires suivantes :

a) l'établissement du niveau de puissance moyen des détections pour chacun des deuxième, avant-dernier et dernier filtres Doppler en dehors des angles morts de couverture de la porte de distance de la matrice de portée Doppler,
b) la comparaison des niveaux de puissance moyens ainsi établis à un seuil prédéfini dérivé d'un rapport caractéristique d'écho parasite sur bruit provoqué par la pluie,
c) l'exclusion des détections des filtres Doppler dont le niveau de puissance moyen est supérieur au seuil prédéfini d'un traitement ultérieur.

**3.** Procédé selon la revendication 1 ou 2, **caractérisé en ce que** le train d'impulsions de la forme d'onde comprend plusieurs groupes d'impulsions dites rafales, chaque rafale présentant une fréquence de répétition d'impulsions différente.

4. Procédé selon la revendication 3, **caractérisé en ce que** seules les rafales sont utilisées pour la détection de cibles qui possèdent des fréquences de répétition d'impulsions pour lesquelles la plus petite des deux distances suivantes a), b), telle que représentée dans la matrice de portée Doppler est la plus grande :

   a) la distance entre une cible et les zones de la matrice de portée Doppler qui sont sensibles aux échos parasites de pluie, d'éolienne ou de sol,
   b) la distance entre la cible et les angles morts de couverture de porte de distance de la matrice de portée Doppler.

Fig. 1

Fig. 2

Fig. 3a

Fig. 3b

## Fig. 4

## Fig. 5

## REFERENCES CITED IN THE DESCRIPTION

**Patent documents cited in the description**

- CA 2593436 A1

**Non-patent literature cited in the description**

- **SKOLNIK M.I.** Radar Handbook. McGraw Hill, 1990
- **STIMSON, GEORGE W.** Introduction to Airborne Radar. SCITECH Publishing Inc, 1998
- **SKOLNIK M.I.** Introduction to Radar Systems. Mc-Graw Hill Higher Education, 2001
- **OPPENHEIM, ALAN V. ; SCHAFER, RONALD W.** Digital Signal Processing. Prentice Hall Inc, 1975
- **HARRIS, FREDERIC J.** On the Use of Windows for Harmonic Analysis with the Discrete Fourier Transformation. *Proceedings of the IEEE,* January 1978, vol. 66 (1